# EUROPEAN PATENT SPECIFICATION

(11) **EP 0 411 120 B1**
(45) Date of publication and mention of the grant of the patent: **01.09.1993**
(21) Application number: 88903377.5
(22) Date of filing: 15.04.1988
(51) Int. Cl.: G11B 7/125

(54) **LASER REPRODUCTION APPARATUS**
LASERWIEDERGABEGERÄT
APPAREIL DE REPRODUCTION A LASER

(30) Priority: 15.04.1987 JP 92379/87
(43) Date of publication of application: 06.02.1991
(73) Proprietor: SONY CORPORATION, Tokyo 141 (JP)
(72) Inventor: OGAWA, Hiroshi Sony Corporation, Tokyo 141 (JP); HORIMAI, Hideyoshi Sony Magnetic Products, Inc., Tokyo 141 (JP)
(74) Representative: Cotter, Ivan John
(86) International application number: PCT/JP88/00376
(87) International publication number: WO 88/08191

(56) References cited:
- JP-A-58 175 146
- JP-A-60 243 832
- PATENT ABSTRACTS OF JAPAN, vol. 5, no. 92 (P-66)[764], 16th June 1981; & JP-A-56 37 834
- PATENT ABSTRACTS OF JAPAN, vol. 5, no. 48 (P-55)[720], 7th April 1981; & JP-A-56 3441
- PATENT ABSTRACTS OF JAPAN, vol. 10, no. 68 (P-437)[2125], 18th March 1986; & JP-A-60 205 834
- PATENT ABSTRACTS OF JAPAN, vol. 10, no. 300 (P-506)[2356], 14th October 1986; & JP-A-61 115 250

## Description

The present invention relates to laser reproducing apparatus that reproduces data recorded on a recording medium such as an optical disc, a magneto-optical disc or the like by irradiation by a laser beam.

As data recording and reproducing means in which data is rewritable, there has been recently developed the magneto-optical disc.

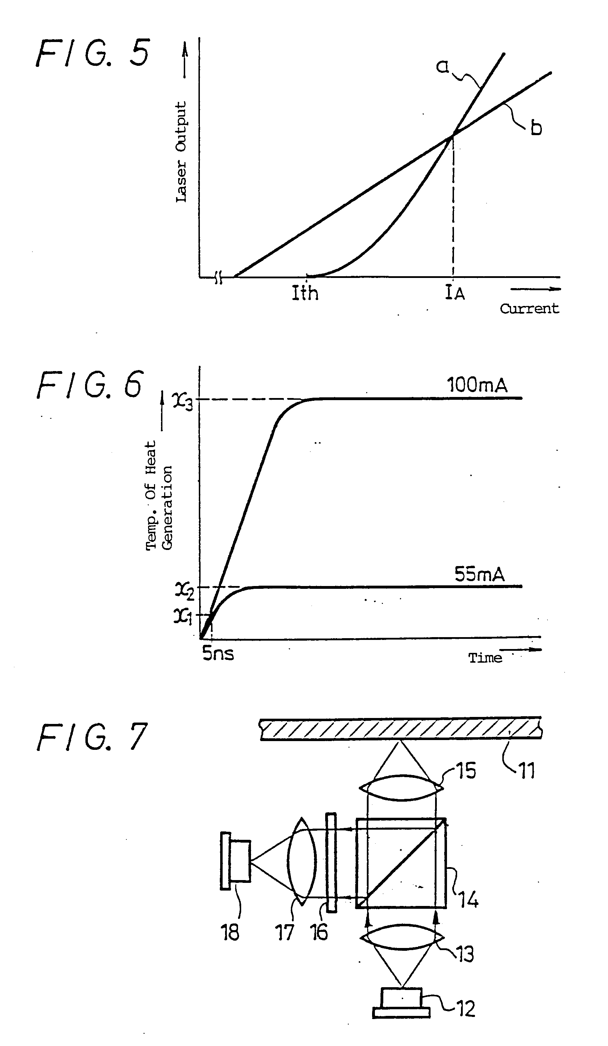

Data recorded on a magneto-optical disc is reproduced therefrom by means of a pickup device such as, for example, that shown in Fig. 7. When the recorded data is reproduced from a magneto-optical disc 11 on which data has already been recorded by changing the magnetization direction, a laser beam emitted by a laser diode 12 irradiates the magneto-optical disc 11 through a collimator lens 13, a beam splitter 14 and an objective lens 15. Reflected light from the magneto-optical disc 11 is again introduced into the beam splitter 14 through the objective lens 15, whereby the reflected light is changed by the beam splitter 14. The light thus changed is introduced through an analyzer 16 and a lens 17 into a light receiving element 18.

The condition of the magneto-optical disc 11 can be determined by detecting the polarized state of the light incident on the light receiving element 18, so that the recorded data can be reproduced.

When the data is reproduced using the pickup device shown in Fig. 7, however, so-called reflected-back light occurs. The laser beam from the laser diode 12 is reflected on the magneto-optical disc 11 and a part thereof passes through the beam splitter 14 and is returned to the laser diode 12. This reflected-back light makes the oscillation mode of the laser diode 12 unstable, causing the waveform of a reproduced signal to be distorted. Also, mode-hopping noise or the like occurs in which a plurality of longitudinal modes concur unstably, thus making it impossible to reproduce the data accurately. Specifically, in the case of the above-mentioned optical system in which the outward and backward paths of the laser beam are changed by the beam splitter, as compared to an optical system in which a polarizing beam splitter is employed as a beam splitter and a $\frac{\text{1}}{\text{4}}$ wavelength plate is provided between this beam splitter and an objective lens, from a construction standpoint, the reflected-back light occurs frequently, so that the waveform distortion of the reproduced signal, the mode-hopping noise and so on occur frequently.

To solve this problem, a technique is proposed in Japanese Patent Application Publication No. JP-A-59-908 6 (published on February 29, 1984) in which a high frequency signal of about 700 MHz is superimposed upon a laser drive signal supplied, for example, to a semiconductor laser, and a multi-mode laser is output by this semiconductor laser thereby removing the effect caused by the reflected-back light. However, since a circuit for superimposing a high frequency signal treats a signal of a relatively high power, the arrangement is complicated. Also, the impedance of this circuit cannot be matched with the laser diode without difficulty, so that mode-hopping noise and waveform distortion cannot be reduced sufficiently.

According to one aspect of the invention there is provided laser reproducing apparatus for reproducing data recorded on a recording medium by irradiation by a laser beam from a laser diode, said laser reproducing apparatus being characterised in that a current value for a drive signal for driving said laser diode is set near a value at which the irradiating state of the laser beam is changed least by reflected-back light, and in that irradiation by the laser beam at said current value is carried out intermittently at a predetermined frequency, the duration of each irradiation by said laser beam being selected such that the recorded data is not affected at said current value, and the ratio of the duration of each irradiation to the period during which the laser beam does not irradiate being ≦ 1/3.

Embodiments of the invention provide laser reproducing apparatus generally of the kind hereinbefore described but which has a simple arrangement and which can reproduce data satisfactorily.

When the said current value is set at the value at which the influence of the reflected-back light is least, distortion of the waveform of the reproduced signal, the occurrence of the mode-hopping noise due to the reflected-back light and so on can be avoided, so that the data can be reproduced satisfactorily. The duration of each irradiation by the laser beam is determined such that data cannot be recorded on the recording medium at the set current value. Also, heat generation in the laser diode or the like can be suppressed by intermittent irradiation for a short period of time so that the arrangement of the driving circuit for driving the laser diode can be simplified.

According to another aspect of the invention there is provided laser reproducing apparatus for reproducing data recorded on a recording medium by irradiation by a laser beam from a laser diode, said laser reproducing apparatus being characterised in that a current value for a drive signal for driving said laser diode is set near a value at which the irradiating state of the laser beam is changed least by reflected-back light, and in that irradiation by the laser beam at said current value is carried out intermittently at a predetermined frequency which is more than twice the spatial frequency of a reproducing system for recorded data when a reproduced signal is integrated and then read out.

According to a further aspect of the invention there is provided laser reproducing apparatus for reproducing data recorded on a recording medium by irradiation by a laser beam from a laser diode, said laser reproducing apparatus being characterised in that a current value for a drive signal for driving said laser diode is set near a value at which the irradiating state of the laser beam is changed least by reflected-back light, and in that irradiation by the laser beam at said current value is carried out intermittently at a predetermined frequency which is equal to the spatial frequency of a reproducing system for recorded data when a sample is read out.

An embodiment of the invention will now be described, by way of example, with reference to the accompanying drawings in which:
Figure 1 is a diagram showing the construction of laser reproducing apparatus embodying the invention;
Figures 2, 3, 4, 5 and 6 are diagrams used in explaining the operation of the embodiment of Figure 1; and
Figure 7 is a diagram showing the construction of an example of a pickup portion of laser reproducing apparatus.

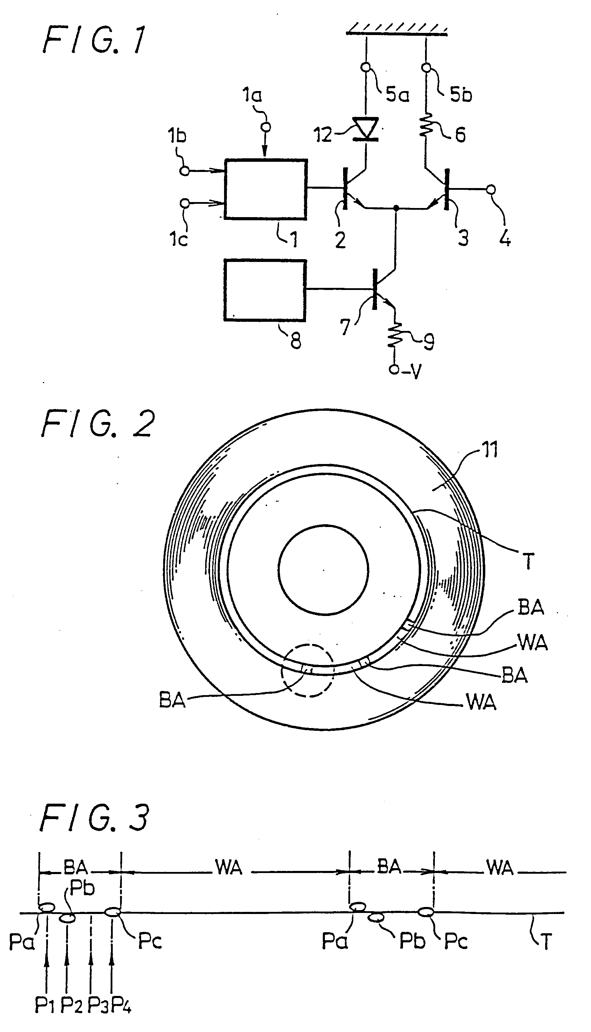

The embodiment of laser reproducing apparatus to be described reproduces data recorded on a magneto-optical disc. The way in which data is recorded on the magneto-optical disc will be described first. As shown in Figure 2, a plurality of tracks T are formed on a magneto-optical disc 11 in the circumferential direction. Servo areas BA are formed on the tracks T at predetermined spacings. The servo areas BA are formed on the disc in advance by an embossing process.

Each servo area BA is followed by a data recording area WA in which data can be recorded.

In the servo areas BA, pits Pa, Pb and Pc are formed in advance by a concave and convex embossing process as shown in Figure 3. Upon reproduction, a clock signal for a tracking control signal reference and a focus control signal are generated by detecting the pits Pa, Pb and Pc, and the mirror surface portion in which these pits are not formed, by sampling pulses P1, P2, P3 and P4.

The arrangement of reproducing apparatus for reproducing the magneto-optical disc will be described nest with reference to Fig. 1. Fig. 1 is a diagram showing an arrangement for a laser diode driving circuit that is connected to a laser diode 12 of the reproducing apparatus. Irradiation by the laser beam from this laser diode 12 is controlled by a pulse signal generator 1. Specifically, the pulse signal generator 1 is provided with a mode signal input terminal 1a, a clock signal input terminal 1b and a pulse width setting signal input terminal 1c, each serving as an input terminal. The pulse signal derived from the pulse signal generator 1 is supplied to the base of a first NPN transistor 2. The emitter of the first transistor 2 is connected to the emitter of a second NPN transistor 3, and the base of the second transistor 3 is connected to a reference voltage signal supply terminal 4. The collectors of the first and second transistors 2 and 3 are respectively connected to one end of the laser diode 12 and a resistor 6, while the other ends of the laser diode 12 and the resistor 6 are connected to ground terminals 5a and 5b of the power supply terminals. The emitters of the first and second transistors 2 and 3 are connected to the collector of a third NPN transistor 7, and the base of the third transistor 7 is connected to a current setting voltage signal generating circuit 8. The emitter of the third transistor 7 is connected through a resistor 9 to a negative voltage source -V.

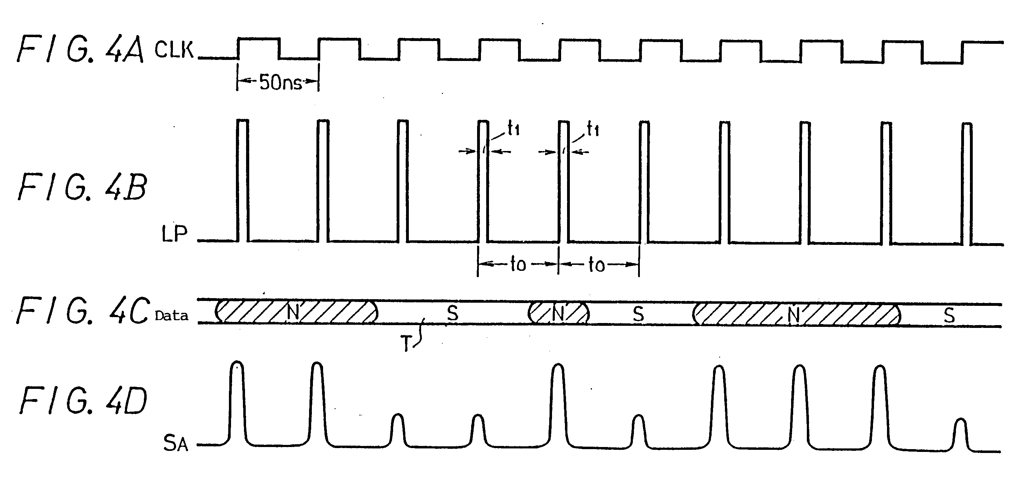

In this way, the circuit for driving the laser diode 12 is constructed so that irradiation by the laser beam from the laser diode 12 is performed in correspondence with the pulse signal derived from the pulse signal generator 1. This pulse signal generator 1 receives at its input terminal 1a a mode signal by which three kinds of irradiation modes, such as irradiation for writing data to the magneto-optical disc, irradiation for erasing data and irradiation for reading data from the magneto-optical disc, are determined. This pulse signal generator also receives at its clock signal input terminal 1b a clock signal CLK having a cycle of, for example, 50 ns as shown in Fig. 4A. In this embodiment, when data is read out from the magneto-optical disc, or the data is reproduced, on the basis of the pulse width setting signal supplied to the input terminal 1c, the pulse signal generator 1 produces a pulse signal LP shown in Fig. 4B. This pulse signal LP is a signal of period t₀ (50 ns) which is synchronized with the clock signal CLK having a cycle of 50 ns, and is delivered as a pulse signal having a pulse width t₁ during the cycle t₀. When the pulse signal having the pulse width t₁ is produced, the first transistor 2 is turned ON so that the laser beam is radiated from the laser diode 12 thereby carrying out intermittent irradiation having the pulse width t₁ in every period t₀. The current value at this time is determined by the voltage signal derived from the current setting voltage signal generating circuit 8.

The current value is determined by the output characteristic of the laser beam containing the reflected-back light in this embodiment. That is, the light reflected-back from the magneto-optical disc 11 is provided in the laser beam outputting portion of the laser diode 12 by the use of the pickup portion shown in Fig. 7. This reflected-back light, when it occurs, causes the output of the laser beam to be changed. Fig. 5 is a graph showing the way that the output of the laser beam is changed. As shown in this graph, as compared with an output characteristic a of the laser diode 12 under the assumption that no reflected-back light exists, an output characteristic b of the same laser diode 12 including the influence of the reflected-back light is higher up to a constant current value I_{A}. If the current exceeds this current value I_{A}, the output characteristic a without the reflected-back light exceeds the output characteristic b with the reflected-back light. The phenomenon in which the laser output is changed by the reflected-back light is referred to as SCOP (SCOP being the abbreviation for Self-coupled Optical Pick Up).

If the SCOP phenomenon occurs due to the reflected-back light, the distortion in the waveform of the reproduced signal exerts a bad influence on the operation of reading data. However, there is no influence by the reflected-back light near the current value I_{A}. Thus, when the value of current supplied to the laser diode 12 is set near the current value I_{A}, a laser beam providing a small waveform distortion in the reproduced signal is radiated on to the magneto-optical disc. This current value I_{A} is determined on the basis of the characteristic of the semiconductor laser element itself. The current value I_{A} of the laser diode 12 in this embodiment is 100 mA. For this reason, in the case of this embodiment, the value of the current supplied to the laser diode 12 when the above-mentioned pulse signal LP is produced is selected to be 100 mA, while if the above-mentioned pulse signal LP is not produced, the above current value is selected to be 0 mA.

The laser beam output when the laser diode is supplied with the current of 100 mA is too high for reproducing data from the magneto-optical disc so that continuous irradiation causes the data recorded on the magneto-optical disc to be erased. Consequently, in the case of this embodiment, the pulse width t₁ of the pulse signal LP (Fig. 4B) which enables the above-mentioned intermittent irradiation to be performed is selected to be 5 ns. Accordingly, the drive current having the current value I_{A} flows through the laser diode 12 during the period of 5 ns, while no drive current flows therethrough during the period of 45 ns. With the irradiation of 5 ns, the recorded data or the like is not erased and the data can be read out satisfactorily. It is desirable for the ratio between the period t₁, in which the drive current of value I_{A} flows, and the period (t₀ - t₁) in which no drive current flows to be selected as 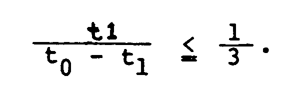
This ratio is determined on the basis of the characteristics, such as reflectivity or the like, of the magneto-optical disc. For example, when data is recorded on the track T of the magneto-optical disc by changing the magnetization direction as shown in Fig. 4C, a photo-detecting signal S_{A} corresponding to the reflected light incident on the light receiving element 18 of the optical pickup in the example of Fig. 7 becomes a signal corresponding to the recorded data as shown in Fig. 4D, thus carrying out reading of the data.

The noise level of the signal thus read can be suppressed to be low. In other words, since the level of the noise in the photo-detecting signal is constant regardless of the level of the photo-detecting signal, the relative noise level is lowered in the photo-detecting signal whose level is high due to the above-mentioned large current, thus reproducing the data satisfactorily.

In this embodiment, the value of the drive current supplied to the laser diode 12 is selected so as to avoid the influence of the reflected-back light so that the waveform of the reproduced signal can be prevented from being distorted substantially. Further, although the cycle is 50 ns, that is, a relatively low frequency of 20 MHz from a frequency standpoint, the pulse width of the laser emission is selected to be 5 ns. Thus, mode-hopping noise can be substantially avoided and hence, from this viewpoint, the data can be reproduced satisfactorily. In addition, since the influence of the reflected-back light is removed by the selection of the current value, the circuit and the power source for superimposing a high frequency signal are not needed, unlike the prior art, thus further simplifying the circuit arrangement. At the same time, the power consumption can be reduced. Also, as the influence of the reflected-back light can be removed, even a recording medium such as a CD-ROM or the like made of aluminum-system material or the like which is highly reflective can be read satisfactorily by a pickup portion of the same arrangement.

Further, since the data is read out intermittently as described above, heat generation by the laser diode 12 can be suppressed. Specifically, Fig. 6 is a graph illustrating heat-generation by the laser diode. In the semiconductor laser, the temperature due to heat generation becomes constant after the elapse of a constant time corresponding to the irradiation output. However, the temperature does not reach a predetermined temperature by irradiation for a time period as short as 5 ns. The temperature x₁ due to heat generation at a current value of 100 mA and a time period of 5 ns can be considerably suppressed as compared with the temperature x₂ of heat generation for continuous irradiation at a current value of 55 mA and the temperature x₃ due to heat generation for continuous irradiation at a current value of 100 mA. Thus, it becomes unnecessary to provide a circuit which can correct the fluctuation in the output of the laser beam due to the fluctuation of the operating point (Ith in Fig. 5) brought about by heat generation in the laser diode 12. Therefore, the circuit arrangement can be simplified more.

The light emission frequency $\frac{\text{1}}{\text{t₀}}$, which is determined by the light emission interval t₀ of the laser beam, may when the reproduced signal is integrated and processed, be more than twice the spatial frequency of the reproducing system that reproduces the data recorded on the recording medium. When the sample is read out, the light emission frequency may be equal to the spatial frequency of the reproducing system of the recorded data and it may fall in a range of, for example, about several MHz to several tens of MHz.

While reproducing apparatus for a magneto-optical disc has been described, the invention can of course be applied to a reproducing apparatus for other recording media such as optical discs, optical cards and the like utilizing a laser beam.

## Claims

1. Laser reproducing apparatus for reproducing data recorded on a recording medium (11) by irradiation by a laser beam from a laser diode (12), said laser reproducing apparatus being characterised in that a current value for a drive signal for driving said laser diode (12) is set near a value (I_{A}) at which the irradiating state of the laser beam is changed least by reflected-back light, and in that irradiation by the laser beam at said current value is carried out intermittently at a predetermined frequency (1/t₀), the duration (t₁) of each irradiation by said laser beam being selected such that the recorded data is not affected at said current value, and the ratio of the duration (t₁) of each irradiation to the period (t₀-t₁) during which the laser beam does not irradiate being ≦ 1/3.

2. Laser reproducing apparatus according to claim 1, wherein the current value for the drive signal during each said period (t₀-t₁) is selected to be zero.

3. Laser reproducing apparatus for reproducing data recorded on a recording medium (11) by irradiation by a laser beam from a laser diode (12), said laser reproducing apparatus being characterised in that a current value for a drive signal for driving said laser diode (12) is set near a value (I_{A}) at which the irradiating state of the laser beam is changed least by reflected-back light, and in that irradiation by the laser beam at said current value is carried out intermittently at a predetermined frequency (1/t₀) which is more than twice the spatial frequency of a reproducing system for recorded data when a reproduced signal is integrated and then read out.

4. Laser reproducing apparatus for reproducing data recorded on a recording medium (11) by irradiation by a laser beam from a laser diode (12), said laser reproducing apparatus being characterised in that a current value for a drive signal for driving said laser diode (12) is set near a value (I_{A}) at which the irradiating state of the laser beam is changed least by reflected-back light, and in that irradiation by the laser beam at said current value is carried out intermittently at a predetermined frequency (1/t₀) which is equal to the spatial frequency of a reproducing system for recorded data when a sample is read out.

## Patentansprüche

1. Laserwiedergabegerät zur Wiedergabe von auf einem Datenträger (11) aufgezeichneten Daten durch Bestrahlung mit einem Laserstrahl einer Laserdiode (12),
**dadurch gekennzeichnet,** daß eine Stromgröße eines Betriebssignals zum Betrieb der Laserdiode (12) nahe bei einem Wert (I_{A}) eingestellt ist, bei welchem der Bestrahlungszustand des Laserstrahls wenigstens durch rückreflektiertes Licht geändert ist, und daß die Bestrahlung durch den Laserstrahl bei der Stromgröße mit einer vorbestimmten Frequenz (1/t₀) intermittierend ausgeführt ist, wobei die Dauer jeder Bestrahlung durch den Laserstrahl derart ausgeführt ist, daß die aufgezeichneten Daten bei der Stromgröße nicht beeinflußt sind und das Verhältnis zwischen der Dauer (t₁) jeder Bestrahlung und der Periode (t₀-t₁), während welcher der Laserstrahl nicht bestrahlt, kleiner oder gleich 1/3 ist.

2. Laserwiedergabegerät nach Anspruch 1, wobei die Stromgröße für das Betriebssignal während jeder Periode (t₀-t₁) gleich null gewählt ist.

3. Laserwiedergabegerät zur Wiedergabe von auf einem Datenträger (11) aufgezeichneten Daten durch Bestrahlung mit einem Laserstrahl einer Laserdiode (12),
**dadurch gekennzeichnet,** daß eine Stromgröße eines Betriebssignals zum Betrieb der Laserdiode (12) nahe bei einem Wert (I_{A}) eingestellt ist, bei welchem der Bestrahlungszustand des Laserstrahls wenigstens durch rückreflektiertes Licht geändert ist, und daß die Bestrahlung durch den Laserstrahl bei der Stromgröße mit einer vorbestimmten Frequenz (1/t₀), die mehr als das Doppelte der Ortsfrequenz eines Wiedergabesystems für aufgezeichnete Daten bei Integration und nachfolgendem Auslesen eines wiedergegebenen Signals beträgt, intermittierend ausgeführt ist.

4. Laserwiedergabegerät von auf einem Datenträger (11) aufgezeichneten Daten durch Bestrahlung mit einem Laserstrahl der Laserdiode (12),
**dadurch gekennzeichnet,** daß eine Stromgröße eines Betriebssignals zum Betrieb der Laserdiode (12) nahe bei einem Wert (I_{A}) liegt, bei welchem ein Bestrahlungszustand des Laserstrahls wenigstens durch rückreflektiertes Licht geändert ist, und daß die Bestrahlung durch den Laserstrahl bei der Stromgröße mit einer vorbestimmten Frequenz (1/t₀) intermittierend ausgeführt ist, die gleich der Ortsfrequenz eines Wiedergabesystems für aufgezeichnete Daten beim Auslesen eines Samples ist.

## Revendications

1. Appareil de lecture à laser, destiné à lire des données enregistrées sur un support d'enregistrement (11) par projection d'un faisceau laser d'une diode laser (12), l'appareil de lecture à laser étant caractérisé en ce qu'une valeur du courant d'un signal de pilotage de la diode laser (12) est réglée à proximité d'une valeur (I_{A}) à laquelle l'état d'irradiation du faisceau laser est le moins modifié par la lumière rétroréfléchie, et en ce que l'irradiation par le faisceau laser avec cette valeur du courant est réalisée par intermittence à une fréquence prédéterminée (1/t₀), la durée (t₁) de chaque irradiation par le faisceau laser étant choisie de manière que les données enregistrées ne soient pas affectées par la valeur du courant, et le rapport de la durée (t₁) de chaque irradiation à la période (t₀ - t₁) pendant laquelle le faisceau laser n'assure pas d'irradiation étant inférieur ou égal à 1/3.

2. Appareil de lecture à laser selon la revendication 1, dans lequel la valeur du courant du signal de pilotage pendant ladite période (t₀ - t₁) est sélectionnée à une valeur nulle.

3. Appareil de lecture à laser destiné à lire des données enregistrées sur un support d'enregistrement (11) par projection d'un faisceau laser d'une diode laser (12), l'appareil de lecture à laser étant caractérisé en ce qu'une valeur du courant d'un signal de pilotage de la diode laser (12) est réglée près d'une valeur (I_{A}) à laquelle l'état d'irradiation du faisceau laser change le moins sous l'action de la lumière rétroréfléchie, et en ce que l'irradiation par le faisceau laser avec cette valeur du courant est réalisée par intermittence à une fréquence prédéterminée (1/t₀) qui est plus du double de la fréquence spatiale d'un système de lecture des données enregistrées lorsqu'un signal lu est intégré puis lu.

4. Appareil de lecture à laser destiné à lire des données enregistrées sur un support d'enregistrement (11) par projection d'un faisceau laser d'une diode laser (12), l'appareil de lecture à laser étant caractérisé en ce qu'une valeur du courant d'un signal de pilotage de la diode laser (12) est réglée à proximité d'une valeur (I_{A}) à laquelle l'état d'irradiation du faisceau laser est modifié le moins par la lumière rétroréfléchie, et en ce que l'irradiation par le faisceau laser avec cette valeur du courant est réalisée par intermittence à une fréquence prédéterminée (1/t₀) qui est égale à la fréquence spatiale d'un système de lecture des données enregistrées lorsqu'un échantillon est lu.
